# EUROPEAN PATENT APPLICATION

(11) **EP 2 428 556 A1**
(43) Date of publication of application: **14.03.2012**
(21) Application number: 11179811.2
(22) Date of filing: 02.09.2011
(51) Int. Cl.: C11D 3/20, C11D 3/382, C11D 3/43, C11D 7/26, C11D 7/44, C11D 7/50, C09D 9/00, B41F 35/06

(54) **Composition for washing the rubber rollers in printing machines, particularly in offset printing machines**

(30) Priority: 09.09.2010 IT GE20100098
(71) Applicant: Elettra S.R.L., 23887 Olgiate Molgora (LC) (IT)
(72) Inventor: Corti, Marco, I-23900 LECCO (IT); Fumagalli, Riccardo, I-23848 OGGIONO, Province of Lecco (IT); Batti, Daniele, I-27100 PAVIA (IT)
(74) Representative: Porsia, Attilio

(57) **Abstract**

Composition for washing ink from the rubber rollers in printing machines, particularly in offset printing machines, characterized in that it comprises from 30 to 60 wt.% of a mixture of glycero-lipids obtained from the pressing of vegetable seeds and minor amounts varying from 0% to 2% of a selection of corrosion inhibition agents together with a selection of oxidation inhibition agents, furthermore a mixture of methyl esters of vegetable origin, such as stearates, oleates, linoleates, ricinoleates, palmitates, tridecanoates and undecinelates and/or olein. Preferably from 30 to 60 wt.% a standard composition can be as follows:
a) Soya bean oil 49.85%
b) Mixture of methyl esters of vegetable origin 49.85% composed to 75% of stearates (C18:0); oleates (C18:1); linoleates (C18:2); ricinoleates (C18:1,OH) predominantly oleates and linoleates palmitates (C16:0); tridecanoates (C13:1) and undecylenates (C11:1)
c) calcium bis(dinonylnaphthalenesulphonate) 0.1%
d) 2,6-di-ter-butyl-p-cresol 0.2%

## Description

The present invention relates to a composition for washing the rubber blankets of printing rollers, commonly called "blankets", used in offset printing machines for transferring the ink from the printing plate to the paper.

During the production cycle there is inevitably accumulation of ink on the blankets, which increases progressively until it becomes excessive, so that periodic washing of the blankets becomes necessary to restore good print quality.

Currently, washing liquids based primarily on hydrocarbons are used for this washing, and are sprayed on the affected parts by automatic electromechanical devices, for example the device that is the object of patent application No. BO2007A000004 in the name of Finelettra International S.A.

Currently, continuous rotary printing machines, of the so-called reel type, are used for printing, and are provided with printing cylinders covered with rubberized cloths, the aforementioned blankets, which act simultaneously on the opposite faces of a paper web unwound from a reel.

The rotary machines of this type, called "heat-set", are provided at the exit from the primary printing process with multi-chamber stoves that have the function of drying the paper just printed, to pass it to the next phase of cutting and folding.

The washing of the printing cylinders with these hydrocarbon-based washing liquids (commonly called "washes") takes place on the printing units upstream of the chamber stove, so that there is normally transport of hydrocarbons inside said stove due to the fact that the wash sprayed on the blankets with the machine in operation inevitably ends up on the underlying paper web which, impregnated with hydrocarbons, then passes into the stove.

This leads to numerous problems. In fact the washes normally used for printing machines of this type have flash points only a little above 100°C and relatively high degrees of evaporation especially if raised to high temperatures, as occurs when they are inside the stoves of "heat-set" machines.

To guarantee maximum safety and for the use of a wash to be approved, all manner of tests must be carried out, case by case, for verifying that for a particular machine it is not possible for situations with risk of explosion to be created inside the stove, even in the most onerous washing conditions.

Based on the washing liquid selected, consequently a maximum limit is fixed for the amount of solvent that can be used during the washing cycle.

This limit depends mainly on the grade of solvent and is higher, the more the washing liquid guarantees low levels of evaporation (e.g. vapour pressure < 0.01 kPa), high flash point values (e.g. FP > 150°C) and high levels of the lower explosive limit (LEL).

Moreover, the stoves are equipped with safety devices that are actuated and make said stove safe, if a hazardous situation could be created accidentally. Moreover, it should not be underestimated that the vapours of the traditional washes are harmful to health if breathed in.

Another problem connected with the efficiency of washing relates to the fact that the washes used in the washing cycle are not fully utilized for effective washing of the ink owing to the inevitable absorption of solvent by the paper, which displaces the washes from the zone where washing takes place to the back of the rotary press. It is clear that the loss of washing solvent reduces the efficiency of said washing and this is reflected in longer washing times and higher consumptions of solvent, without taking into account that the printed copies produced during the washing process must be discarded because they are of extremely poor quality.

Therefore the present invention relates to a product for pre-treating paper in order to optimize the washing process, making said paper no longer able to absorb the washes in the subsequent washing process and at the same time able to eliminate or minimize the problems connected with passage of the paper through the drying stove, i.e. said product is to have a flash point above 170°C, extremely low degrees of evaporation even at high temperature, low costs of production, low corrosiveness with respect to the metals used for constructing printing machines, practically zero levels of toxicity, high absorbancy of the paper with respect to it, and positive influence on the unit breaking load of the paper.

All these characteristics are displayed by the product according to Claim 1.

According to the present invention, the principal component of the washing composition consists of a mixture based on glycero-lipids obtained from the pressing of vegetable seeds. Suitable components are added to said mixture, for example corrosion inhibition agents and oxidation inhibition agents, which are able to modify its chemical and physical characteristics, so as to make it suitable for the application for which it is intended.

A general formulation of the composition according to the present invention is as follows:
1) Mixture of glycero-lipids obtained from the pressing of vegetable seeds
2) Calcium bis(dinonylnaphthalenesulphonate) (corrosion inhibition agent)
3) 2,6-di-ter-butyl-p-cresol (antioxidation inhibition agent)

The principal component of the composition according to the invention consists of the mixture of glycero-lipids obtained from the pressing of vegetable seeds. The main purpose of this component is to saturate the paper, so as to make it practically impermeable to liquids but without weakening its tensile strength. The glycero-lipids used in the composition according to the invention are preferably selected from the following: soya bean oil, or colza oil or maize oil or a free mixture of said oils. It is of course also possible to employ other vegetable oils, but the oils stated above were chosen as they are the most advantageous in economic terms and have the most suitable physicochemical characteristics.

It is also possible to add small percentages of mineral oils to the mixture of glycero-lipids as stated above. In the composition according to the invention, the aforementioned mixture of glycero-lipids is present in percentages varying from 30 to 60 wt.%.

Another essential component of the composition according to the invention, having an important solvent action on printing ink, consists of a mixture of esters of vegetable origin, such as stearates, oleates, linoleates, ricinoleates, palmitates, tridecanoates and undecinelates, or of olein, or of a free mixture of the components stated above. The percentage by weight of this second component in the mixture can vary from 30% to 60%.

A third component of the mixture consists of one or more surfactant agents, which act as detergents. These preferably consist of alkoxy-polyethoxy-polypropoxy-propanol or of ethoxylated and phosphatated isotridecyl alcohol, or of free mixtures thereof. This third component can be present in a percentage by weight from 0% to 5%.

A fourth component, present in a percentage by weight between 0% and 2% consists of a selection of corrosion inhibition agents. In particular, calcium bis(dinonylnaphthalenesulphonate) or oleoyl sarcosine or lauryl sarcosine are used. Also in this case, it is possible to use free mixtures of the inhibition agents stated above.

Finally, a fifth component of the composition, also present in percentages between 0% and 2%, consists of a series of oxidation inhibition agents selected from 2,6-di-ter-butyl-p-cresol or from other phenols, alone or mixed together.

An example of a preferred composition is as follows; in this example all the percentages are expressed as percentage by weight.

### Example

1) Soya bean oil 49.85%
2) Mixture of methyl esters of vegetable origin 49.85% composed to 75% of stearates (C18:0); oleates (C18:1); linoleates (C18:2); ricinoleates (C18:1,OH) predominantly oleates and linoleates palmitates (C16:0); tridecanoates (C13:1) and undecylenates (C11:1)
3) calcium bis(dinonylnaphthalenesulphonate) 0.1%
4) 2,6-di-ter-butyl-p-cresol 0.2%

The composition according to the present invention has the notable advantage, relative to the hydrocarbon-based compositions currently mainly used, of providing both an impermeabilizing action on the paper and a solvent action for the ink. Moreover, as already mentioned, its use eliminates all the drawbacks associated with the use of hydrocarbon substances in the drying stoves of heat-set machines, formally permitting use of the washing liquid without limits of quantity and without the need to set the stove to conditions of maximum aspiration during the washing cycle.

Leaving the stove free to operate in normal operating conditions, even during the washing cycle, permits a dramatic reduction in the number of copies discarded in the post-washing phase where normally it is necessary to wait for the conditions of dynamic equilibrium of the entire printing process, including the stove, to be restored. The dramatic reduction in number of copies discarded is also the result of particular physicochemical characteristics of the product that mean very limited disturbance of the complex equilibrium of printing both in the printing units and in the stove, as discussed at length above.

Naturally, the present invention is not limited to the examples and to the components described above, but comprises all those modifications and compositional variants falling within the wider scope of the inventive concept, substantially as claimed hereunder.

## Claims

1. Composition for washing the rubber rollers in printing machines, **characterised by** the fact that it comprises from 30 to 60% by weight of a mixture of glycerol-lipids obtained from the pressing of vegetable seeds and minor amounts varying from 0% to 2% of a selection of corrosion inhibition agents together with a selection of oxidation inhibition agents, and for the remainedr by a mixture of methylesters of vegetable origin.

2. Composition according to claim 1 in which the said glycerol-lipids are selected preferably among the following: soya bean oil, or colza oil or maize oil or a free mixture of said oils.

3. Composition according to claim 1, in which the said glycerol-lipids are partially substituted by oily products of mineral origin.

4. Composition according to claim 1, **characterised by** the fact that it comprises further from 30 to 60% by weight of a mixture of esters of vegetal origin, like stearates, oleates, linoleates, ricinoleates, palmitates, tridecanoates and undecylenates and/or olein.

5. Composition according to the preceding claims, **characterised by** the fact that it further comprises from 0% to 5% of a surfactant agent.

6. Composition according to claim 5, **characterised by** the fact that as surfactant agents alkoxy-polyethoxy-polypropoxy-propanol or of ethoxylated and phosphatated isotridecyl alcohol, or their mixtures, are used.

7. Composition according to claim 1, **characterised by** the fact that as corrosion inhibition agents the calcium bis(dinonylnaphthalenesulphonate) or oleoyl sarcosine or lauroyl sarcosine or their mixtures are used.

8. Composition according to claim 1, **characterised by** the fact that as oxidation inhibition agents the 2,6-di-ter-butyl-p-cresol or other phenols are used, alone or in mixture.

9. Composition for washing the ink from the rubber rollers in the printing machines, particularly in the offset printing machines, **characterised by** the fact that it comprises
a) Soya bean oil 49.85%
b) Mixture of methyl esters of vegetable origin 49.85% composed to 75% of stearates (C18:0); oleates (C18:1); linoleates (C18:2); ricinoleates (C18:1,OH) predominantly oleates and linoleates palmitates (C16:0); tridecanoates (C13:1) and undecylenates (C11:1)
c) calcium bis(dinonylnaphthalenesulphonate) 0.1%
d) 2,6-di-ter-butyl-p-cresol 0.2%
